**Europäisches Patentamt**

**European Patent Office**

**Office européen des brevets**

(11) Veröffentlichungsnummer: **0 002 520**
**B1**

(12) **EUROPÄISCHE PATENTSCHRIFT**

(45) Veröffentlichungstag der Patentschrift:
**13.05.81**

(51) Int. Cl.³: **F 16 J 1/04, F 02 F 3/10**

(21) Anmeldenummer: **78101662.1**

(22) Anmeldetag: **13.12.78**

(54) **Kolben für Hubkolben-Verbrennungskraftmaschinen mit einem aussen am Grundkörper des Kolbenschafts angebauten Element.**

(30) Priorität: **14.12.77 DE 2755739**

(43) Veröffentlichungstag der Anmeldung:
**27.06.79 Patentblatt 79/13**

(45) Bekanntmachung des Hinweises auf die Patenterteilung:
**13.05.81 Patentblatt 81/19**

(84) Benannte Vertragsstaaten:
**BE CH DE LU NL SE**

(56) Entgegenhaltungen:
**DE-A-2 651 727**
**DE-B-2 154 953**
**GB-A-1 203 926**
**US-A-3 995 538**

(73) Patentinhaber: **Alcan Aluminiumwerk Nürnberg GmbH,
D-6000 Frankfurt/Main (DE)**

(72) Erfinder: **Mölle, Egon, Ing. grad., Taubenweg 20,
D-8501 Oberasbach (DE)**

(74) Vertreter: **Eitle, Werner, Dipl.-Ing. et al, Arabellastrasse 4,
D-8000 München 81 (DE)**

ACTORUM AG.

## Kolben für Hubkolben-Verbrennungskraftmaschinen mit einem aussen am Grundkörper des Kolbenschafts angebauten Element

Die Erfindung betrifft einen Kolben für Hubkolben-Verbrennungskraftmaschinen gemäss den Merkmalen des Oberbegriffs des Anspruchs 1.

Da bei Verbrennungskraftmaschinen die Kolben trotz unterschiedlicher Wärmeausdehnung von Zylinder- und Kolbenwerkstoff bei allen Betriebstemperaturen einwandfrei laufen müssen, ohne zu klappern oder zu fressen, werden neben anderen Massnahmen in den Grundkörper des Kolbenschaftes u. a. auch ring- oder hülsenförmige Elemente aus einem Werkstoff mit anderer Wärmedehnzahl als der des Kolbengrundwerkstoffs eingebaut, um aufgrund der dadurch auftretenden Bimetallwirkung für eine satte Anlage der Kolbenlauffläche an der Zylinderwand zu sorgen. Durch diese Massnahme wird zugleich die beim Anlagewechsel des Kolbens von einer Laufbahnseite zur anderen akkumulierte kinetische Energie reduziert, die beim Auftreffen des Kolbens auf die Laufbahn des Zylinders Schwingungen in diesem anregt, die mit erheblichem Geräusch verbunden sind. Derartige Konstruktionen werden als Regelkolben bezeichnet.

Ein derartiger, charakteristischer Regelkolben ergibt sich aus der DE-B 1 803 832. Dieser bekannte Kolben besteht aus einem Kolbenkopf mit dem Kolbenboden und einer Ringzone und einem Kolbenschaft sowie zwei Bolzennaben, die über Stützrippen mit dem Kolbenkopf verbunden sind. In den Kolbenschaft sind im wesentlichen ringsegmentförmig gestaltete Einlagen aus Stahlblech eingegossen, die sich von den Bolzennaben beiderseits in Richtung auf die Tragflächenmitten erstrecken, wobei zwischen ihren Enden ein Raum von einer gewissen Breite freibleibt. In axialer Richtung erstrecken sich die Einlagen von der Unterflanke der dem Kolbenschaft zunächst liegenden Kolbenringnut bis etwas unterhalb der Kolbenschaftmitte. Der Kolbenschaft wird dadurch zwar im Bereich der Einlagen in einen äusseren Schaftteil und einen inneren Schaftteil unterteilt, jedoch hängt der äussere Schaftteil mit dem Kolbenkopf im Bereich der Bolzennaben und ihrer Abstützungen zusammen, wodurch eine metallische Brücke gebildet ist, die ein metallisches Geräusch beim Anschlagen des Kolbens an der Zylinderlauffläche bedingt.

Zur Herstellung dieser Regelkolben mit eingegossenen Einlagen sind darüber hinaus komplizierte Formen erforderlich, die die Herstellungskosten erhöhen.

Geräuschdämpfungseffekte sind auch dadurch erzielt worden, dass in der Lauffläche des Kolbenschafts dünne Nutzen bzw. Spalte vorgesehen sind, die aufgrund ihrer Kapillarwirkung während des Betriebs Öl ansaugen, so dass dieses Öl beim Auftreffen des Kolbens auf die Zylinderwand als Art Stossdämpfer geräuschdämmend wirkt. Allerdings besitzt das Öl eine relativ niedrige Viskosität, die nicht in allen Betriebszuständen ausreicht, um die Lauffläche des Kolbens von der Zylinderwand in Abstand zu halten und damit eine Energie- bzw. Schwingungsübertragung zwischen diesen Bauteilen zu verhindern.

Auch diese Kolbenanordnungen sind relativ kompliziert ausgebildet und in der Herstellung entsprechend teuer.

Es ist ferner ein Kolben bekannt (US-A 3 983 793 und US-A 3 995 538), bei dem zwischen dem Kolbenschaft und einer äusseren metallischen Hülse ein Dämpfungsglied aus einem elastomeren Material, z.B. Gummi, angeordnet ist. In dem Dämpfungsglied sind Nuten ausgebildet, in die von der Kolbenkopfseite her über Bohrungen im inneren Kolbenschaft Öl eingeführt wird, das am unteren Ende der Nuten über Bohrungen im inneren Kolbenschaft wieder abgeleitet wird. Bei diesem Kolben soll eine Geräuschdämpfung nicht nur durch die Ausgestaltung der Dämpfungshülse aus einem elastomeren Material beigeführt werden, sondern zusätzlich hierfür Öl verwendet werden, das in der geschilderten Weise durch die Dämpfungshülse geleitet wird. Die Dämpfungshülse soll damit als hydraulischer Dämpfer wirken. Die bekannte Kolbenkonstruktion ist nicht nur kompliziert im Aufbau, sondern erreicht auch nicht im vollen Umfang das angestrebte Ziel einer ausreichenden Geräuschdämpfung. Der komplizierte Aufbau ist nicht nur bedingt durch die geschilderte Führung des der Dämpfung dienenden Öls, die im Kolben und in der Dämpfungshülse zahlreiche Bohrungen bzw. Nuten erfordert. Hinzu kommt noch, dass die äussere metallische Hülse in axialer Richtung zwischen zwei Anschlägen gehalten werden muss, da über die Dämpfungshülse aus elastomerem Material allenfalls nur kleine Scherkräfte übertragen werden können. Daraus resultiert das Erfordernis einer Zweiteilung des bekannten Kolbens senkrecht zu seiner Achse. Die geschilderten Anschläge für die äussere metallische Hülse bilden aber zugleich metallische Geräuschbrükken, die das Laufgeräusch des bekannten Kolbens wieder erhöhen.

Gegenüber diesem Stand der Technik ist es Aufgabe der Erfindung, einen Kolben der vorausgesetzten Art zu schaffen, der sich durch grosse Laufruhe bei einfachem Aufbau und deshalb preisgünstiger Herstellbarkeit auszeichnet.

Diese Aufgabe wird durch die im Anspruch 1 gekennzeichnete Erfindung gelöst.

Der erfindungsgemässe Kolben zeichnet sich durch eine grosse Laufruhe aus, da einerseits die Schicht aus viskoelastischem Klebstoff selbst eine Schalldämpfschicht bildet und andererseits der viskoelastische Klebstoff für eine gewisse elastische Lagerung des mit der Zylinderlauffläche in Berührung kommenden Elements des Kolbens sorgt, wodurch beim Anschlagen des Kolbens an der Zylinderlauffläche die kinetische Energie und damit die auftretenden, zu Geräusch führenden Schwingungen reduziert werden. Da der viskoelastische Klebstoff die einzige unmittelbare Verbindung zwischen dem Element und dem Grundkörper des Kolbenschafts darstellt, sind zwischen dem Element und dem Kolbenschaft keine metallischen Brücken vorhanden, die ansonsten das Geräusch zwischen den Bauteilen des Kolbens übertragen und den metallischen Klang dieses Geräusches bedingen.

Nachdem das Element durch einen einfachen Klebvorgang mit dem Grundkörper des Kolbenschafts des Kolbens verbunden wird, weist der erfindungsgemässe Kolben einen einfachen Aufbau auf und ist damit billig herstellbar.

Ein weiterer Vorteil des erfindungsgemässen Kolbens besteht darin, dass die bei mangelhaften Schmierverhältnissen bei anderen Kolbenkonstruktionen auftretenden grossen Schäden durch Fressen und Abreissen des Kolbens von seiner Pleuelstange vermieden werden, weil das Element bei auftretenden hohen Reibungswiderständen auf- und schliesslich abreisst, so dass Kolben und Pleuel nach wie vor in gewissem Umfang geführt werden, wodurch weitere Schäden vermieden werden.

Als Klebstoff kann vorteilhaft ein hochalterungsbeständiger, dispersiver viskoelastischer Klebstoff auf Acrylatbasis verwendet werden, der dickflüssig bis pastös ist, ein spezifisches Gewicht von 1,1 bei 20°C und bei 60% Festkörpergehalt besitzt und mit weichem Wasser verdünnt ist.

Zweckmässige Weiterbildungen des erfindungsgemässen Kolbens ergeben sich aus den übrigen Ansprüchen.

Das Element kann ringförmig oder bogenförmig ausgebildet sein.

Es kann zweckmässig sein, dass das Element über die gesamte Länge des Kolbenschafts reicht. Dadurch trägt das Element über die gesamte Länge den Kolbenschaft. Dies ist sowohl hinsichtlich der Geräuschdämmung als auch hinsichtlich des Herstellungsvorgangs günstig.

Um eine entsprechende Tragcharakteristik des Kolbens zu gewährleisten, kann gemäss einer weiteren Ausbildung des Erfindungsgegenstands der Aussenmantel des Elements von der Zylinderform abweichen.

Es können ferner mehrere Elemente an der Lauffläche des Kolbenschafts vorgesehen sein. Auch hierdurch lässt sich eine bestimmte Tragcharakteristik des Kolbens einstellen.

Erfindungsgemäss können das Element und der Grundkörper des Kolbenschafts im Anordnungsbereich des Elements gleiche oder unterschiedliche Wanddicken haben. Vorzugsweise ist die Wanddicke des Elements kleiner als die des Grundkörpers des Kolbenschafts.

Das Element und der Grundkörper können ferner aus Werkstoffen mit gleicher Wärmeausdehnung bestehen.

Vorzugsweise besteht der erfindungsgemässe Kolben aus Aluminium oder Aluminiumlegierungen.

Die Erfindung wird im folgenden anhand von in den Zeichnungen dargestellten Ausführungsbeispielen beschrieben. Es zeigt:

Fig. 1 einen Achsschnitt durch ein erstes Ausführungsbeispiel des erfindungsgemässen Kolbens, bei welchem das geräuschdämmende Element auf der Lauffläche des Kolbenschafts aufgebracht ist und über die gesamte Länge des Kolbenschafts reicht, und

Fig. 2 einen Achsschnitt durch ein zweites Ausführungsbeispiel eines erfindungsgemässen Kolbens, bei welchem ein gegenüber der Ausführungsform nach Fig. 1 kürzeres Element an der Lauffläche des Kolbenschafts angeordnet ist.

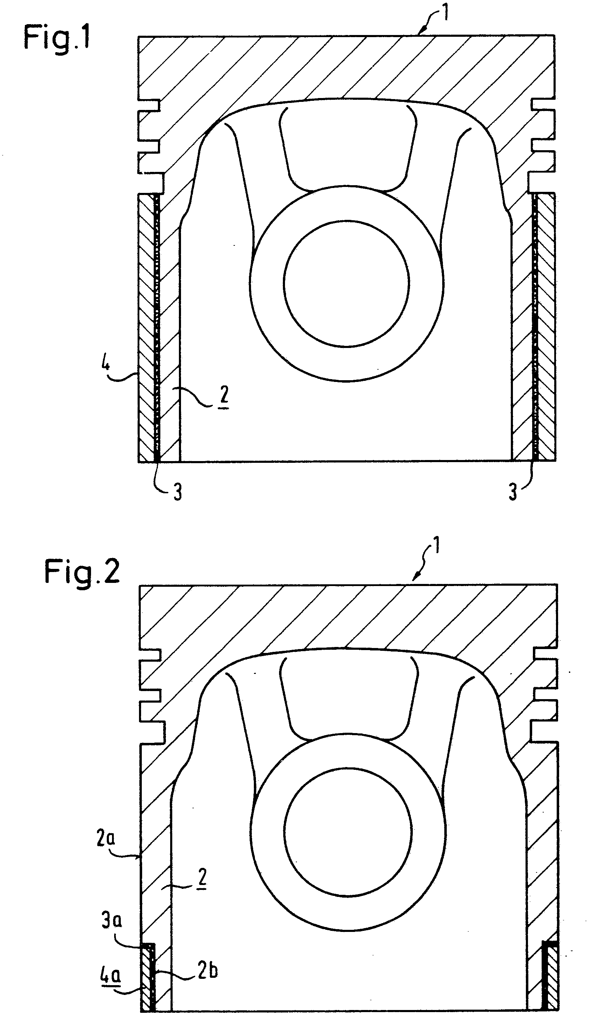

Fig. 1 zeigt einen Achsschnitt durch ein erstes Ausführungsbeispiel eines erfindungsgemässen Kolbens, der insgesamt mit 1 bezeichnet ist. Danach ist auf der äusseren Mantelfläche des Grundkörpers 2 des Kolbenschafts mittels einer viskoelastischen Klebemittelschicht 3 ein zusätzliches Mantelteil bildendes Element 4 aufgeklebt. Durch diese Anordnung ist, wie eingangs erläutert, ein äusserst gut schallgedämpfter Kolben geschaffen.

Bei einem Kolbendurchmesser von 88 mm kann das aufgeklebte Element 4 eine Wanddicke von 1,4 mm bei einer Wanddicke des Grundkörpers 2 des Kolbenschafts von ca. 2,5 mm aufweisen. Sowohl der Kolben als auch das Element 4 können aus Aluminium bestehen. Die Dicke der viskoelastischen Klebemittelschicht 3 kann ca. 10 Micron betragen. Als Klebemittel ist ein hochwertiger, viskoelastischer, alterungsbeständiger Kunstharz-Dispersions-Klebestoff auf Acrylat-Basis eingesetzt, der die am Kolbenschaft auftretenden Betriebstemperaturen ohne Schwierigkeiten verträgt. Der Kolben kann derart konstruiert sein, dass der Kolbenbolzen bedeutend kürzer ist als der Kolbendurchmesser und die zum Sichern des Kolbenbolzens erforderlichen Sicherungen in Nuten liegen, die im Kolbengrundkörper 2 in der Kolbenbolzenbohrung in ungefähr 10 mm Abstand vom Kolbenmantel angebracht sind.

Bei dem in Fig. 2 dargestellten Ausführungsbeispiel ist in der Lauffläche 2a des Grundkörpers 2 des Kolbenschafts ein kürzeres Element 4a vorgesehen. Das Element 4a ist in einem entsprechenden Absatz 2b in der Lauffläche 2a des Grundkörpers 2 des Kolbenschaftes eingebettet und mittels einer viskoelastischen Klebemittelschicht 3a mit dem Grundkörper 2 verklebt.

**Patentansprüche**

1. Kolben für Hubkolben-Verbrennungskraftmaschinen, bei dem aussen am Grundkörper des Kolbenschaftes mindestens ein ring- oder bogenförmiges Element angebaut und zwischen diesem Element und dem Grundkörper eine elastische Schicht eingebracht ist, dadurch gekennzeichnet, dass die elastische Schicht durch einen viskoelastischen Klebstoff (3; 3a) als einziger Verbindung zwischen dem Element (4; 4a) und dem Grundkörper (2) gebildet ist.

2. Kolben nach Anspruch 1, dadurch gekennzeichnet, dass das Element (4) über die gesamte Länge des Kolbenschafts reicht (Fig. 1).

3. Kolben nach Anspruch 2, dadurch gekennzeichnet, dass die Aussenform des Elements (4) von der Zylinderform abweicht.

4. Kolben nach einem der Ansprüche 1 oder 3, dadurch gekennzeichnet, dass mehrere Elemente (4a) an der Lauffläche des Kolbenschafts vorgesehen sind.

5. Kolben nach einem der vorhergehenden Ansprüche, dadurch gekennzeichnet, dass das Element (4; 4a) und der Grundkörper (2) des Kolbenschafts im Anordnungsbereich des Elements unterschiedliche Wanddicken haben.

6. Kolben nach einem der vorhergehenden Ansprüche, dadurch gekennzeichnet, dass das Element (4; 4a) und der Grundkörper (2) aus Werkstoffen mit gleicher Wärmeausdehnung bestehen.

## Revendications

1. Piston pour moteurs à combustion à pistons alternatifs dans lequel au moins un élément annulaire ou en forme d'arc est monté extérieurement sur le corps de base de la tige de piston, une couche élastique étant insérée entre cet élément et le corps de base, caractérisé par le fait que la couche élastique est formée par une colle viscoélastique (3; 3a) servant de liant unique entre l'élément (4; 4a) et le corps de base (2).

2. Piston selon la revendication 1, caractérisé par le fait que l'élément (4) s'étend sur toute la longueur de la tige de piston (figure 1).

3. Piston selon la revendication 2, caractérisé par le fait que la forme extérieure de l'élément (4) diffère de la forme cylindrique.

4. Piston selon la revendication 1 ou 3, caractérisé par le fait que plusieurs éléments (4a) sont prévus sur la portée de la tige de piston.

5. Piston selon l'une des revendications précédentes, caractérisé par le fait que l'élément (4; 4a) et le corps de base (2) de la tige de piston ont des épaisseurs de paroi différentes dans la zone d'application de l'élément.

6. Piston selon l'une des revendications précédentes, caractérisé par le fait que l'élément (4; 4a) et le corps de base (2) sont réalisés en des matériaux présentant la même dilatation thermique.

## Claims

1. Piston for lifting cylinder-internal combustion engines, wherein at least one annular or curved element is attached outside on the basic body of the piston shaft and between said element and said basic body a resilient layer is placed, characterized in that said resilient layer is formed by a viscous-elastic adhesive (3; 3a) as sole connection between said element (4; 4a) and said basic body (2).

2. Piston according to claim 1, characterized in that said element (4) extends over the entire length of said piston shaft (Fig. 1).

3. Piston according to claim 2, characterized in that the outer form of said element (4) deviates from the cylinder form.

4. Piston according to one of the claims 1 or 3, characterized in that a plurality of elements (4a) are provided on the sliding surface of said piston shaft.

5. Piston according to one of the preceding claims, characterized in that said element (4; 4a) and said basic body (2) of said piston shaft have walls of different thickness in the disposition region of said element.

6. Piston according to one of the preceding claims, characterized in that said element (4; 4a) and said basic body (2) consist of materials having equal thermal expansion.

**Fig.1**

**Fig.2**